# EUROPEAN PATENT APPLICATION

(11) **EP 4 668 658 A1**
(43) Date of publication of application: **24.12.2025**
(21) Application number: 24807566.5
(22) Date of filing: 16.05.2024
(51) Int. Cl.: H04L 5/00, H04L 27/26

(54) **METHOD AND APPARATUS FOR PERFORMING C-OFDMA OPERATION IN MULTI-AP COMMUNICATION IN WIRELESS LAN SYSTEM**

(30) Priority: 16.05.2023 KR 20230063168
(71) Applicant: LG Electronics Inc., Yeongdeungpo-gu Seoul 07336 (KR)
(72) Inventor: CHUN, Jinyoung, Seoul 06772 (KR); CHOI, Jinsoo, Seoul 06772 (KR); LIM, Dongguk, Seoul 06772 (KR); PARK, Eunsung, Seoul 06772 (KR)
(74) Representative: Plasseraud IP
(86) International application number: PCT/KR2024/006642
(87) International publication number: WO 2024/237695

(57) **Abstract**

Proposed are a method and an apparatus for performing a C-OFDMA operation in multi-AP communication in a wireless LAN system. In particular, a first transmission STA transmits a TWT request frame to a second transmission STA. The first transmission STA receives a TWT response frame from the second transmission STA. The first transmission STA acquires a first SP on the basis of the TWT response frame. The first transmission STA transmits and receives, during the first SP, a signal on a second frequency resource that is different from a first frequency resource allocated to a third transmission STA. The second transmission STA is an AP that controls communication between multiple APs. The first and third transmission STAs are APs which share information regarding the communication between the multiple APs with the second transmission STA.

## Description

### TECHNICAL FIELD

This specification relates to a technique for performing C-OFDMA operation in multi-AP communication in a wireless LAN system, and more specifically, to a scheduling method and device according to the minimum allocated resources of each AP by applying the C-OFDMA scheme.

### BACKGROUND ART

A wireless local area network (WLAN) has been improved in various ways. For example, the IEEE 802.11ax standard proposed an improved communication environment using orthogonal frequency division multiple access (OFDMA) and downlink multi-user multiple input multiple output (DL MU MIMO) techniques.

The present specification proposes a technical feature that can be utilized in a new communication standard. For example, the new communication standard may be an extreme high throughput (EHT) standard which is currently being discussed. The EHT standard may use an increased bandwidth, an enhanced PHY layer protocol data unit (PPDU) structure, an enhanced sequence, a hybrid automatic repeat request (HARQ) scheme, or the like, which is newly proposed. The EHT standard may be called the IEEE 802.1 The standard.

In a new WLAN standard, an increased number of spatial streams may be used. In this case, in order to properly use the increased number of spatial streams, a signaling technique in the WLAN system may need to be improved.

### DISCLOSURE

### TECHNICAL PROBLEM

This specification proposes a method and device for performing C-OFDMA operation in multi-AP communication in a wireless LAN system.

### TECHNICAL SOLUTION

An example of this specification proposes a method for performing C-OFDMA operation in multi-AP communication.

This embodiment may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

The present embodiment is performed by a first transmitting station (STA), and the first and third transmitting STAs may correspond to a shared access point (AP) in multi-AP communication. A second transmitting STA of the present embodiment may correspond to a shared AP in the multi-AP communication. The first and second receiving STAs of the present embodiment may correspond to at least one STA.

This embodiment proposes a scheduling method according to/based on the minimum allocated resources of each AP by applying the C-OFDMA scheme in communication between multiple access points (or Multi-AP operation). In particular, this embodiment proposes a static or dynamic scheduling method according to/based on resource units to perform C-OFDMA operation. In addition, this embodiment is not limited to the C-OFDMA scheme, and other coordinated Multi-AP schemes such as C-SR and C-BF may be applied.

A first transmitting station (STA) transmits a Target Wake Time (TWT) request frame to a second transmitting STA.

The first transmitting STA receives a TWT response frame from the second transmitting STA.

The first transmitting STA obtains a first Service Period (SP) based on the TWT response frame.

During the first SP, the first transmitting STA transmits or receives a signal on a second frequency resource different from a first frequency resource allocated to a third transmitting STA.

The second transmitting STA is an AP (Sharing AP) that controls multiple access points (multi-AP) communication. The first and third transmitting STAs are APs (Shared APs) that receive information on the multi-AP communication from the second transmitting STA.

That is, this embodiment proposes a method in which a Sharing AP applies C-OFDMA scheme to schedule shared APs according to/based on the minimum allocated resources in multi-AP communication (multi-AP operation).

### ADVANTAGEOUS EFFECTS

According to the embodiment proposed in this specification, by proposing the C-OFDMA scheme as a coordination method for effectively performing the multi-AP communication, it is possible to perform appropriate scheduling between each AP, and thus, an increase in the overall network throughput can be expected.

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 is a diagram illustrating the layout of resource units (RUs) used for a 20 MHz PPDU.
FIG. 7 is a diagram illustrating the layout of resource units (RUs) used for 40MHz PPDU.
FIG. 8 is a diagram illustrating the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used/supported/defined within the 6 GHz band.
FIG. 13 illustrates an example of a modified transmission device and/or receiving device of the present specification.
FIG. 14 illustrates operation according to a conventional STX operation.
FIG. 15 illustrates an example of Coordinated OFDMA (C-OFDMA).
FIG. 16 illustrates an example of Coordinated Beamforming (CBF).
FIG. 17 illustrates an example of AP selection.
FIG. 18 illustrates an example of JTX/JT.
FIG. 19 illustrates an example of an OBSS environment.
FIG. 20 illustrates an example of a C-OFDMA procedure.
FIG. 21 illustrates an example of configuring a U-SIG and UHR-SIG for each 80MHz channel for a C-OFDMA procedure.
FIG. 22 illustrates an example of configuring a United U-SIG and UHR-SIG for each 20MHz channel for a C-OFDMA procedure.
FIG. 23 illustrates an example of configuring an AP-specific U-SIG and UHR-SIG for each 20MHz channel for a C-OFDMA procedure.
FIG. 24 illustrates an example of an individual TWT operation.
FIG. 25 is a flowchart illustrating the operation of a transmitting device according to the present embodiment.
FIG. 26 is a flowchart illustrating the operation of a receiving device according to the present embodiment.
FIG. 27 is a flowchart illustrating a procedure in which a Sharing AP performs a C-OFDMA operation according to the present embodiment.
FIG. 28 is a flowchart illustrating a procedure in which a Shared AP performs C-OFDMA operation according to the present embodiment.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

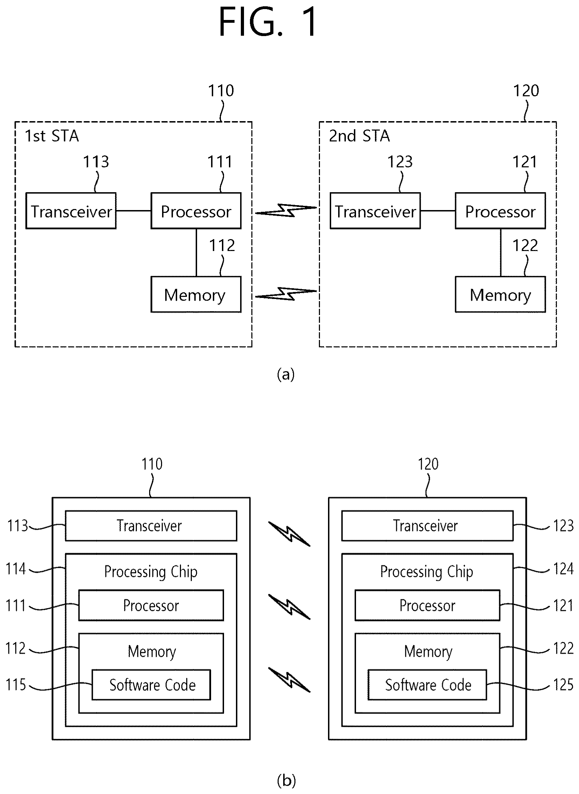

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

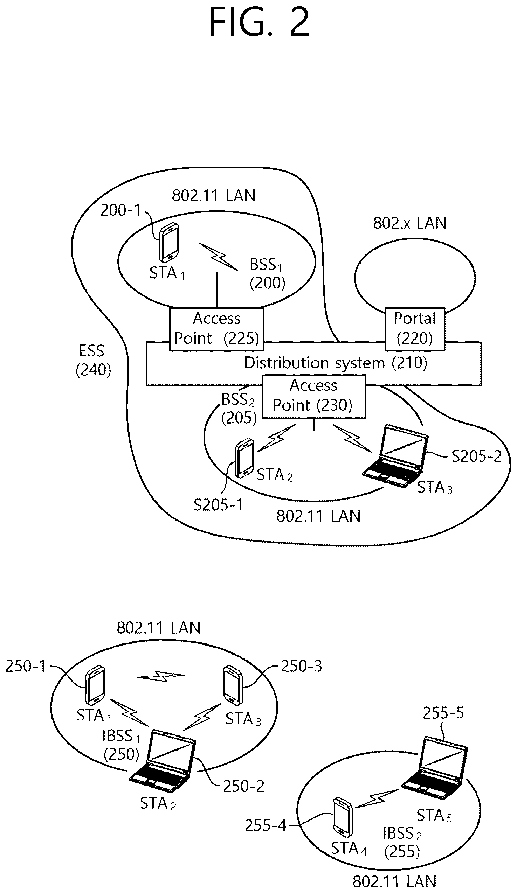

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

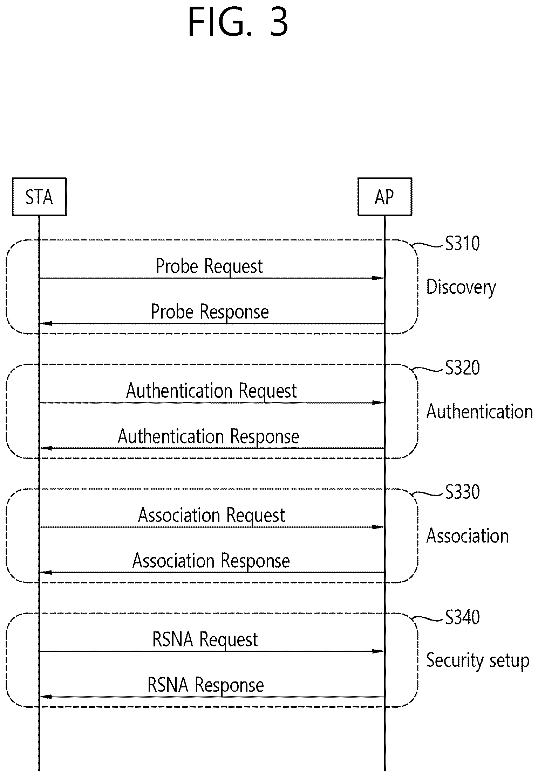

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

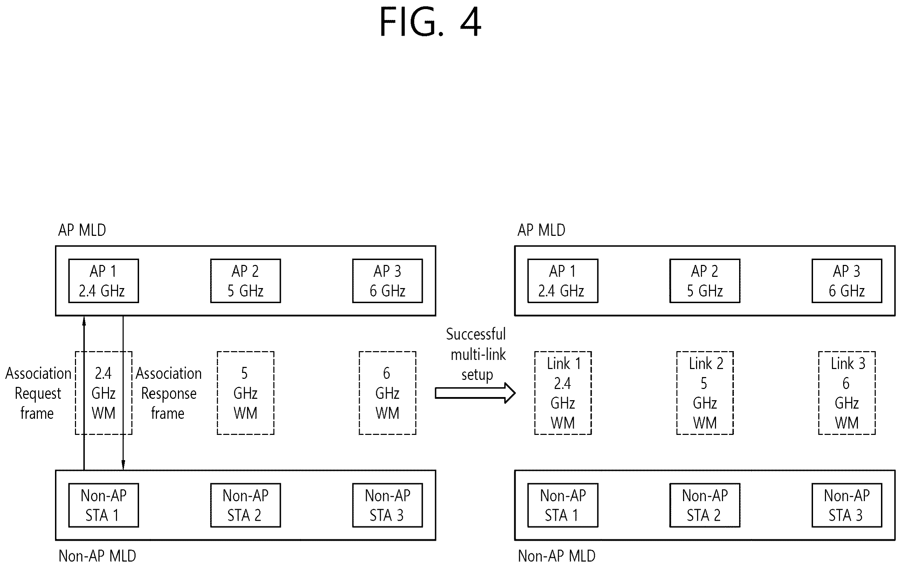

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

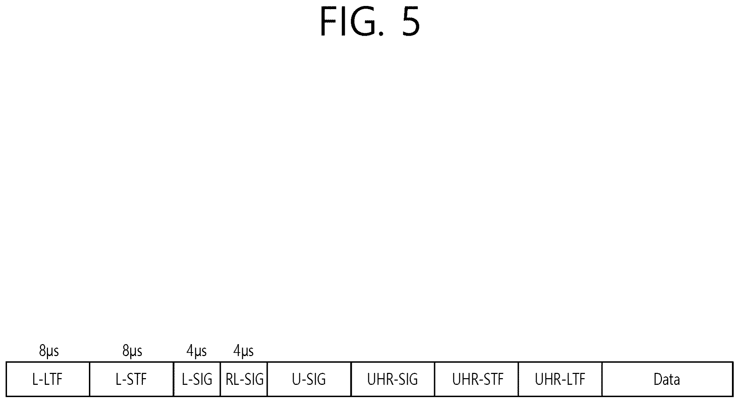

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

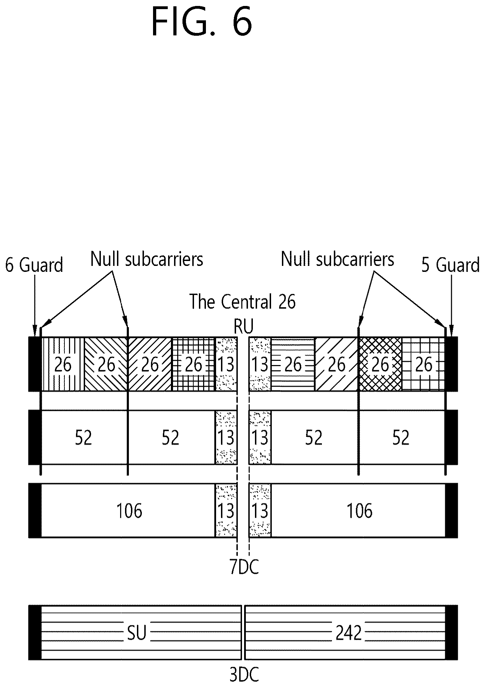

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{ subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index {-28, -27, +27, +28). The aforementioned signal may be used for channel estimation in the frequency domain corresponding to {-28, -27, +27, +28).

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

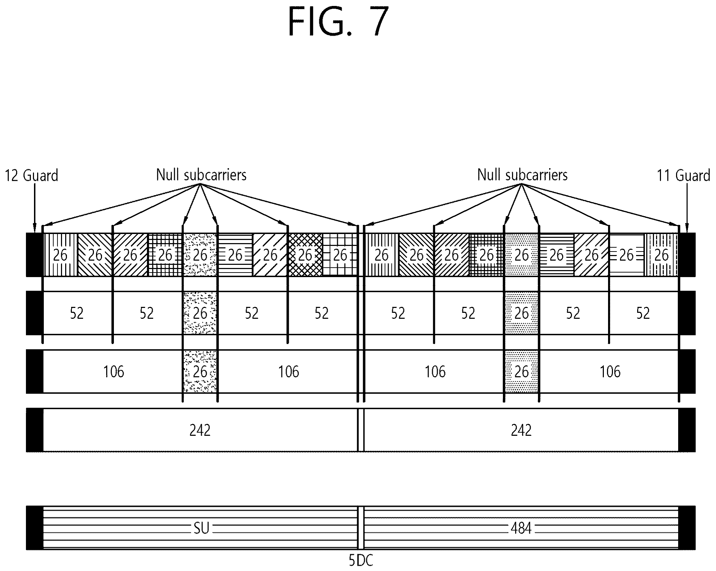

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

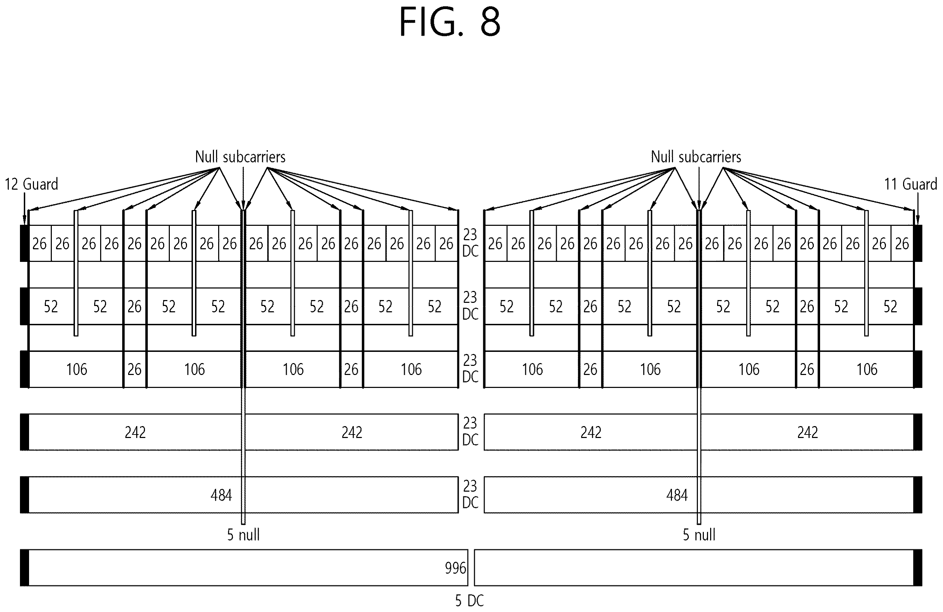

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

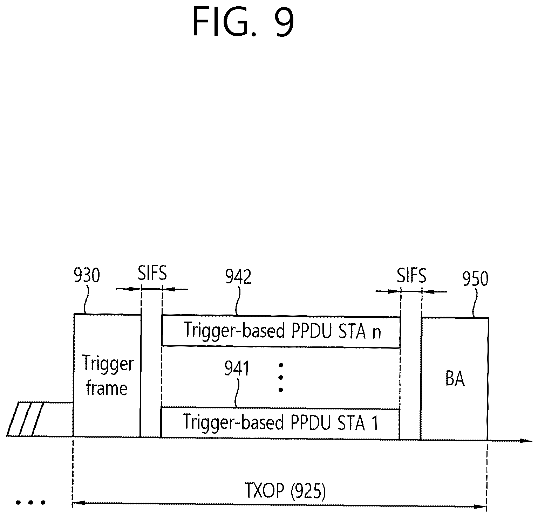

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

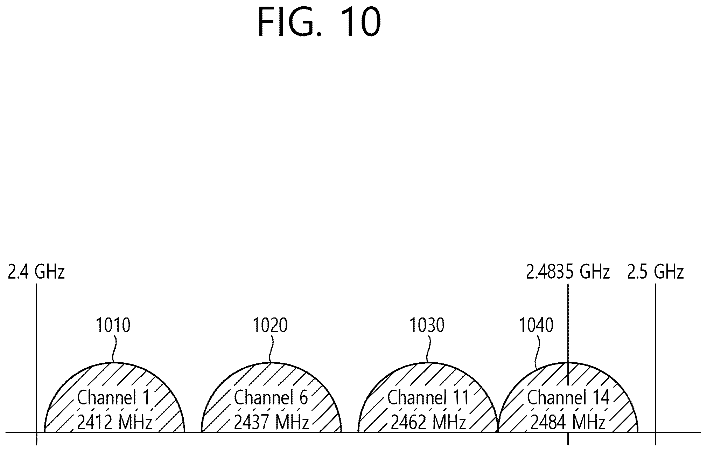

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

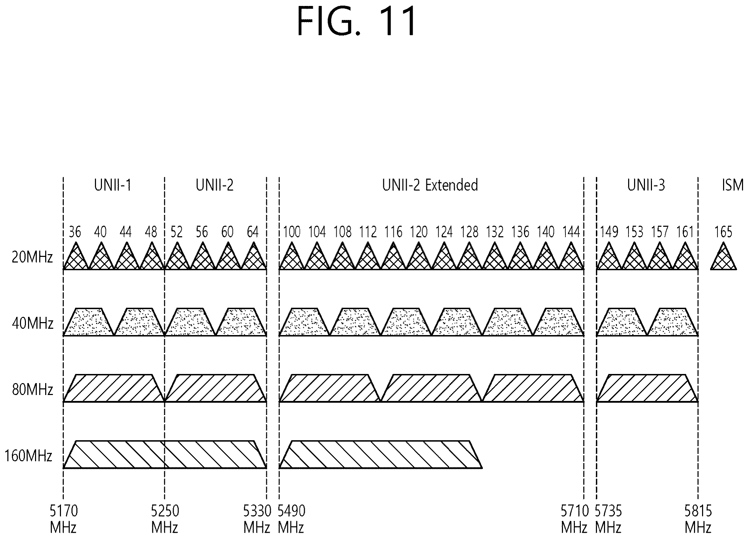

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

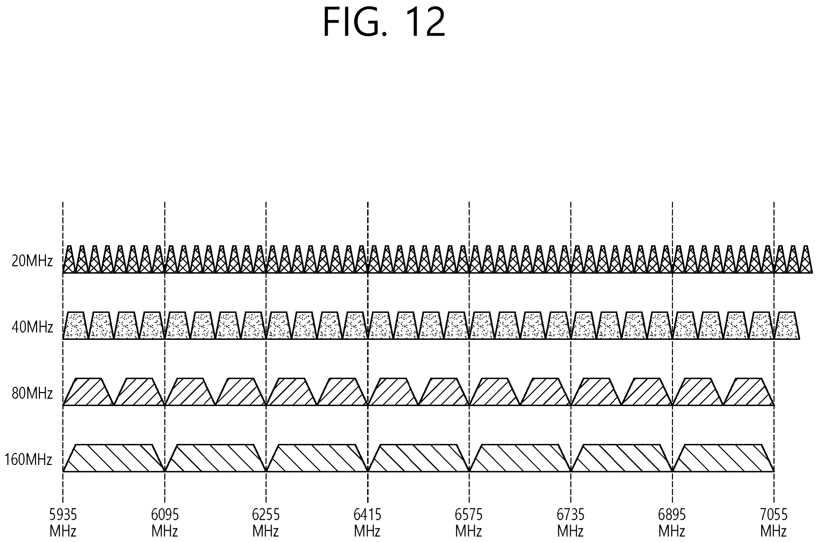

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

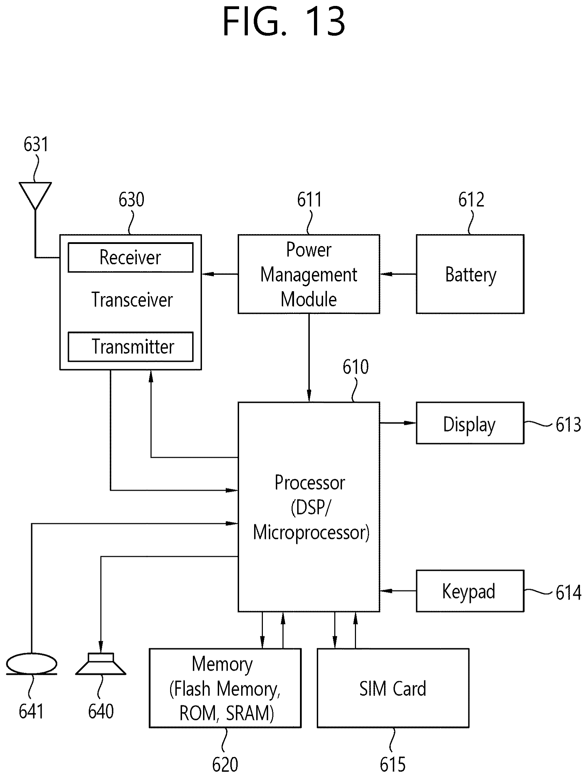

FIG. 13 shows a modified example of a transmitting device and/or a receiving device of the present disclosure.

The devices (e.g., AP STA, non-AP STA) shown in FIGS. 1 to 4 can be modified as shown in FIG. 13. The transceiver 630 of FIG. 13 can be identical to the transceiver 113, 123 of FIG. 1. The transceiver 630 of FIG. 13 can include a receiver and a transmitter.

The processor 610 of FIG. 13 can be identical to the processor 111, 121 of FIG. 1. Alternatively, the processor 610 of FIG. 13 can be identical to the processing chip 114, 124 of FIG. 1.

The memory 150 of FIG. 13 may be the same as the memory 112, 122 of FIG. 1. Alternatively, the memory 150 of FIG. 13 may be a separate external memory different from the memory 112, 122 of FIG. 1.

Referring to FIG. 13, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 13, the speaker (640) may output sound-related results processed by the processor 610. The microphone (641) may receive sound-related input to be used by the processor 610.

Below, the Multi-AP operation applied to this specification is described.

The Multi-AP operation refers to a communication technique involving multiple APs in a WLAN. For example, the Multi-AP operation may refer to an operation in which one or more APs transmit and receive information to one or more STAs. In contrast to the Multi-AP operation, existing techniques may be expressed using various terms, such as STX (Single Transmission). For example, the STX operation may refer to a method in which one BSS AP communicates with one BSS STA. When communication is performed based on the STX operation, interference with adjacent APs (e.g., APs located in an overlapping BSS) may occur. This interference may result in reduced transmission and reception performance for cell-edge users (e.g., non-AP STAs located at the edge of the BSS).

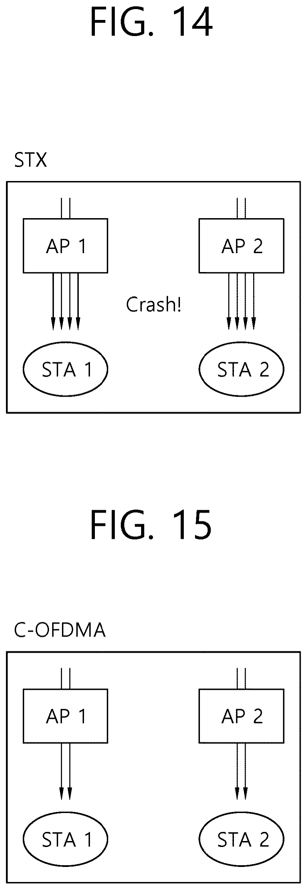

FIG. 14 illustrates operation according to a conventional STX operation. As shown, adjacent AP1 and AP2 can cause interference between STAs and APs.

To improve the STX operation, a new multi-AP operation is proposed. This multi-AP operation can be based on a technology that reduces various interferences, such as inter-symbol interference (ISI), through coordination with neighboring APs (e.g., APs located in an overlapping BSS).

In FIG. 14, STA1 and AP1 may be included in a BSS, and STA2 and AP2 may be included in an OBSS (Overlapping Basic Service Set). That is, STA2 may be an unassociated STA to AP1, and STA1 may be an unassociated STA to AP2.

For example, the Multi-AP operation can be classified into various technologies/types/formats/protocols, etc. For example, the Multi-AP operation can include Coordinated TDMA (C-TDMA) that distinguishes wireless resources allocated to multiple APs based on a time axis (time domain). Additionally or alternatively, the Multi-AP operation can include Coordinated OFDMA (C-OFDMA) that distinguishes wireless resources allocated to multiple APs based on a frequency axis (time domain). Additionally or alternatively, the Multi-AP operation can include Coordinated Spatial Reuse (C-SR) that applies Spatial Reuse (SR) to at least one AP. Additionally or alternatively, the Multi-AP operation can include Coordinated beamforming (CBF)/nulling that nulls and transmits interference generated from neighbors (e.g., adjacent APs/STAs, and/or OBSS APs/OBSS STAs). Additionally or alternatively, the Multi-AP operation may include AP selection in which an AP with a good channel condition among neighboring APs (e.g., at least one AP located within a BSS or OBSS and with a good channel condition) transmits. Additionally or alternatively, the Multi-AP operation may include Joint Transmission (JTX) or JT in which multiple APs (e.g., multiple APs included in the same BSS/OBSS, or multiple APs included in different BSS/OBSS) cooperate to perform simultaneous transmission and reception, and JTX/JT may be implemented based on Joint Beamforming or Joint MU-MIMO.

FIG. 15 illustrates an example of Coordinated OFDMA (C-OFDMA). The illustrated AP1 can transmit a PPDU/signal to STA1, and AP2 can transmit a PPDU/signal to STA2. The transmission from AP1 and the transmission from AP2 can be performed in the same/overlapping time interval. The transmission from AP1 to STA1 can be performed based on a first frequency band, and the transmission from AP2 to STA2 can be performed based on a second frequency band different from the second frequency band. For example, in FIG. 15, STA1 and AP1 can be included in a BSS, and STA2 and AP2 can be included in an OBSS. That is, STA2 can be an unassociated STA to AP1, and STA1 can be an unassociated STA to AP2.

Although not illustrated in FIG. 15, an example of Coordinated TDMA (C-TDMA) is also possible. For example, the acquired TXOP can be divided into specific time units (e.g., slots), and the divided slots can be sequentially assigned to multiple different APs.

The above-described C-OFDMA example can be further modified as follows. For example, an AP (e.g., AP1) that has acquired a TXOP can share frequency resources with at least one neighboring AP (e.g., AP2 in the BSS/OBSS). For example, shared frequency resources can be defined on a resource unit (RU) basis or a subchannel basis. For example, for flexibility, frequency resources can be shared from AP1 to AP2 in 20/40/80 MHz subchannels or 242/484/996-tone RU units.

AP1, performing C-OFDMA, can act as a sharing AP or a master AP. That is, AP1 can request at least one neighboring AP (e.g., AP2 in the BSS/OBSS) to report information about the channel and/or buffer status. Based on this, AP1 can obtain a TXOP and share a part of the frequency resource (e.g., a 20 MHz subchannel or a RU of a certain size) with at least one AP in the vicinity (e.g., AP2 existing in the BSS/OBSS) within all or part of the time interval related to the TXOP.

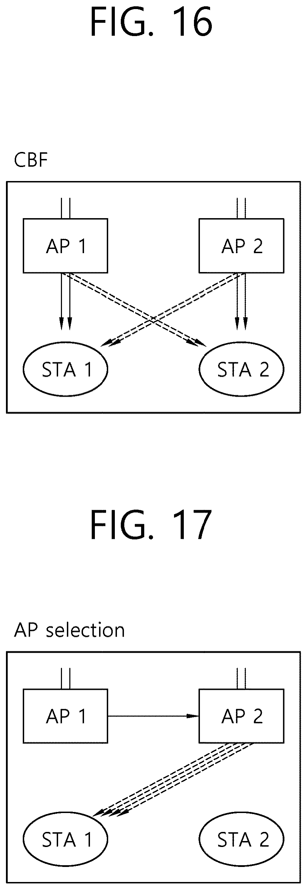

FIG. 16 illustrates an example of Coordinated Beamforming (CBF). The illustrated AP1 may transmit a PPDU/signal to STA1, and AP2 may transmit a PPDU/signal to STA2. The transmission from AP1 and the transmission from AP2 may be performed in the same/overlapping time interval. The transmission from AP1 and the transmission from AP2 may be performed through the same/overlapping frequency band. In order to reduce interference caused to STA2 by AP1, AP1 may perform nulling/beamforming toward STA2, and in order to reduce interference caused to STA1 by AP2, AP2 may perform nulling/beamforming toward STA1. For example, such nulling/beamforming may be implemented in a manner of positioning a radiation null to a neighboring unassociated STA. The above-described nulling/beamforming may make a specific AP invisible to a neighboring unassociated STA. For example, the above-described nulling/beamforming may make AP1 (or AP2) invisible to STA2 (or STA1).

For example, in FIG. 16, STA1 and AP1 may be included in the BSS, while STA2 and AP2 may be included in the OBSS. In other words, STA2 may be an unassociated STA to AP1, and STA1 may be an unassociated STA to AP2.

Although not illustrated in FIG. 16, control signals (e.g., coordination frames) for nulling/beamforming between AP1 and STA2 and/or nulling/beamforming between AP2 and STA1 may be transmitted and received over the backhaul link between AP1 and AP2.

FIG. 17 illustrates an example of AP selection. The illustrated AP2 is judged to have a better channel condition than AP1. AP1 transmits its data/signal to AP2 via a backhaul link, and AP2 can transmit a signal to STA1 instead of AP1. For example, in FIG. 17, STA1 and AP1 may be included in a BSS, and STA2 and AP2 may be included in an OBSS. In other words, STA2 may be an unassociated STA to AP1, and STA1 may be an unassociated STA to AP2.

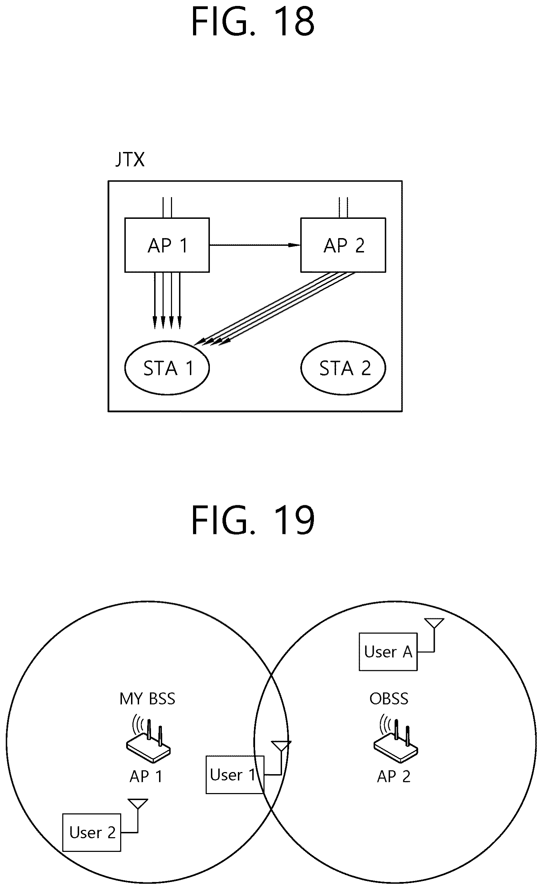

FIG. 18 illustrates an example of JTX/JT. The illustrated AP1 can transmit to STA1 together with AP2. For example, the PPDU/signal transmitted from AP2 to STA1 may be all or part of the same as the PPDU/signal transmitted from AP1 to STA1. For example, the PPDU/signal transmitted from AP2 to STA1 may be simultaneously transmitted through the same/overlapping frequency band as the PPDU/signal transmitted from AP1 to STA1. For example, the PPDU/signal transmitted from AP2 to STA1 may be a signal transmitted from AP1 through a backhaul link. For example, in FIG. 18, STA1 and AP1 may be included in a BSS, and STA2 and AP2 may be included in an OBSS. That is, STA2 may be an unassociated STA to AP1, and STA1 may be an unassociated STA to AP2.

More specifically, in FIG. 18, AP1 can transmit a coordination request (or can be named variously, such as a first request, a control request, etc.) to AP2 and receive a coordination response (or can be named variously, such as a first response, a control response, etc.) from AP2. Through the exchange of the request/response, information about coordination between AP1 and AP2 (e.g., information about whether AP1 and AP2 will perform simultaneous transmission to STA1), information about the point in time when coordination starts, information about the point in time when AP1 and AP2 start simultaneous transmission to STA1, information about data shared between AP1 and AP2, etc. can be exchanged. AP1 can share its data with AP2 via the backhaul link. Thereafter, AP1 can transmit a coordination trigger frame (or can be named variously, such as a trigger frame) to AP2 and perform simultaneous transmission to STA1 based on the trigger frame.

FIG.19 illustrates an example of an OBSS environment.

An Overlapping Basic Service Set (OBSS) environment refers to a network environment in which a portion of the space with the same channel configuration overlaps between two BSSs. Referring to FIG. 19, OBSS indicates overlap or interference between MY BSS (network by AP1) to which User 1 (STA 1) is connected and an adjacent BSS (network by AP2) to which User 1 (STA 1) is not connected.

### <Embodiments applicable to this specification>

This specification proposes an operation and configuration method for applying Coordinated OFDMA (or Coordinated FDMA), one of the multi-AP operations. In other words, this specification proposes a resource unit and scheduling method for configuring C-(O)FDMA.

Here, the "AP" can refer to a single AP or a single link. The AP may or may not be co-located, and may refer to one of multiple APs or links connected to a single Distributed System (DS).

In an isolated BSS (IBSS) or overlapping BSS (OBSS) scenario, the goal is to increase throughput at different signal-to-interference-plus-noise ratio (SINR) levels, improve delay distribution and jitter tailing through inter-BSS mobility, and enhance efficient medium utilization in an OBSS scenario.

C-OFDMA is a scheme in which multiple APs transmit and receive data using allocated frequency resources across the entire bandwidth. This can increase SINR gains, as OBSS APs do not utilize the frequency resources used by BSS APs. Furthermore, by reusing frequency resources, C-OFDMA+C-SR can improve efficient medium utilization for OBSS APs.

This specification proposes C-OFDMA operation based on the size of the allocated frequency resources. The definitions and assumptions for this are as follows. An EHT AP that acquires a TXOP and initiates multi-AP coordination is a shared AP. An EHT AP that cooperates with a shared AP for multi-AP transmissions is a shared AP. The sharing AP can be one of the shared APs or can be changed. Some or all associated STAs may not hear signals from the sharing AP and/or other shared APs.

### 1. Example of C-OFDMA procedure

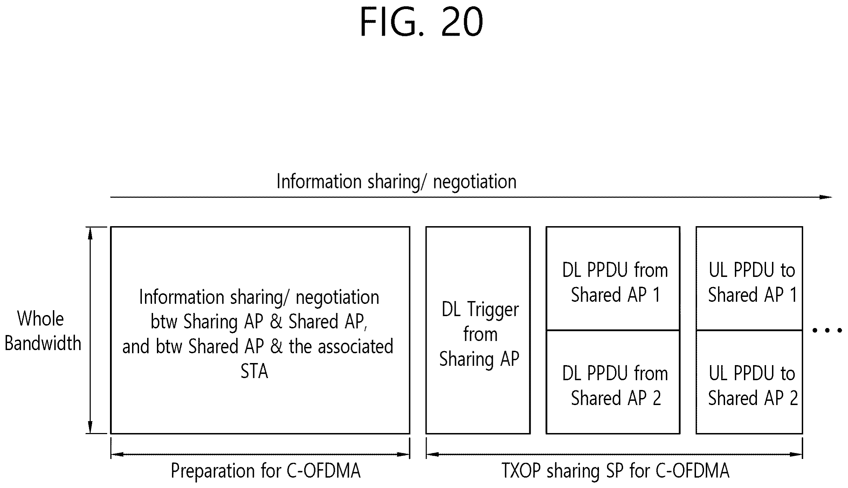

FIG. 20 illustrates an example of a C-OFDMA procedure.

The basic procedures for C-OFDMA are as follows. However, the procedures may be modified (omitted, or specific information or signaling may be added) due to certain issues.
1) Preparation: Sharing or negotiating specific information required prior to C-OFDMA operation.
   -> Between Sharing AP and Shared AP(s): Request/report channel status, and request/announce/confirm allocated frequency resources or service periods for C-OFDMA operation.
   -> Between a shared AP and associated STAs: Channel status information is requested/reported, and service periods, such as operating frequency resources or C-OFDMA operation, are requested/announced/confirmed for the shared AP.
2) Set TXOP sharing: If C-OFDMA transmissions are allowed during a specific service period, a TXOP sharing SP (service period) can be set.
   -> Several contributions are made to extend the Target Wakeup Time (TWT) for multi-AP operation.
3) DL Trigger frame: A sharing AP can trigger shared APs to transmit signals at the same time.
   -> This is a new type of trigger frame for triggering DL PPDUs. Furthermore, this can exist depending on the scheduling method.
4) DL C-OFDMA PPDU: A shared AP transmits its signal on pre-allocated frequency resources.
   -> This format depends on the minimum allocated frequency resources per AP.
5) UL C-OFDMA PPDU: An STA can transmit its own signal in response to a DL C-OFDMA PPDU.
   -> This format is similar to the TB PPDU.

The C-OFDMA procedure can be applied differently depending on the minimum resource unit for C-OFDMA. The minimum resource unit refers to the minimum frequency resource allocated to each shared AP.

The resource units have effects such as DL C-OFDMA PPDU format (SIG design), PPDU alignment, and scheduling method.

This embodiment analyzes and proposes the impact when the resource unit is 80 MHz and 20 MHz. The case below 20 MHz is not considered because it is very difficult for the Sharing AP to schedule appropriate Small RUs to the Shared AP for all C-OFDMA operations, and it requires transmitting PPDUs from several Shared APs on the same 20 MHz channel and creating new U-SIGs and EHT-SIGs for the C-OFDMA PPDU.

### 2. SIG design for resource units for C-OFDMA procedures

### 1) 80 MHz units

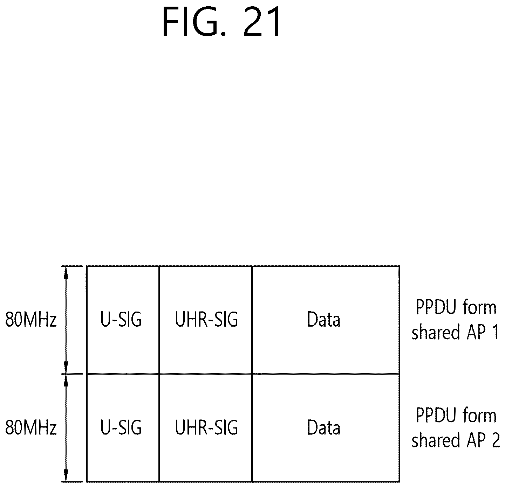

FIG. 21 illustrates an example of configuring a U-SIG and UHR-SIG for each 80MHz channel for a C-OFDMA procedure.

Referring to FIG. 21, PPDUs from Shared AP1 are allocated to the upper 80MHz channel, and PPDUs from Shared AP2 are allocated to the lower 80MHz channel. It can be seen that U-SIG, UHR-SIG (or EHT-SIG), and data are allocated to each Shared AP for each 80MHz channel.

Signals from the Shared AP(s) are not mixed within the 80MHz channel. The Sharing AP allocates resources to each Shared AP in 80MHz units, and the Sharing AP communicates with associated STAs within the unit.

At this time, scheduling gain may not be achieved due to some candidate units. If the operating BW is 160 MHz, only two shared APs can operate. Shared APs supporting an operating BW equal to or greater than 160 MHz can participate in this procedure.

DL C-OFDMA PPDUs can use the DL MU PPDU format. This means that the U-SIG design of 802.11be can be used as is. The 802.11be standard specifies that, "For EHT MU PPDUs, the U-SIG field (content) is identical across all unpunctured 20 MHz subchannels within each 80 MHz frequency subblock, and the U-SIG field (content) is different across different 80 MHz frequency subblocks." Each AP transmits an AP-specific U-SIG along with its own BSS color and its own contents in its assigned 80 MHz unit.

An STA receives a C-OFDMA PPDU from its BSS AP by performing the following operations:

First, the STA decodes the U-SIG for all 80MHz channels and determines its BSS color to receive the C-OFDMA PPDU.

Second, the STA decodes the U-SIG on the frequency resources indicated by the shared AP during preparation, such as Subchannel Selective Transmission (SST) operation, to receive the C-OFDMA PPDU.

Or thirdly, if the Shared APs have different primary 20MHz channels and the Sharing AP allocates an 80MHz unit containing the primary channel of each Shared AP to the Shared AP (for this purpose, primary channel switching can be considered), the STA decodes the U-SIG on the primary 20MHz and receives the C-OFDMA.

### 2) 20MHz unit

Signals from shared APs are not mixed within a 20MHz channel. The sharing AP allocates resources to each shared AP in 20MHz increments, and the sharing AP communicates with associated STAs within these increments.

This provides a scheduling advantage over 80MHz increments. With a 160MHz operating bandwidth, up to eight shared APs can operate simultaneously. Channel information in 20MHz units between the shared AP and associated STAs must be shared with the sharing AP.

A DL C-OFDMA PPDU can be configured as follows. Shared APs transmit their C-OFDMA PPDUs in 20MHz units allocated by the sharing AP. Following the current U-SIG design with replication, the U-SIG of a DL C-OFDMA PPDU can be configured as either a United U-SIG or an AP-specific U-SIG.

### 2-1) United U-SIG

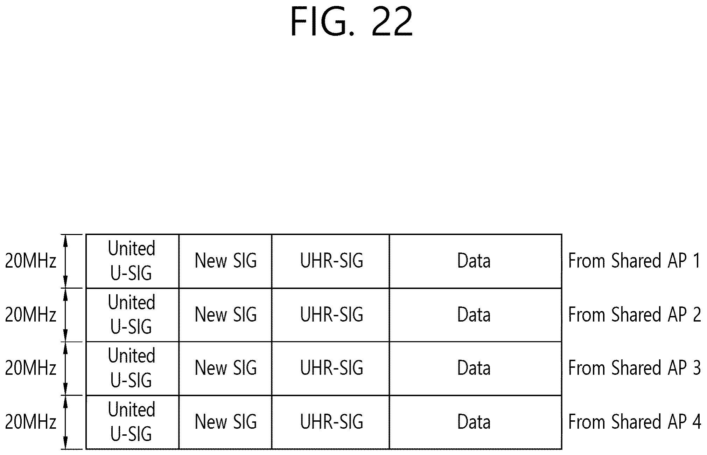

FIG. 22 illustrates an example of configuring a United U-SIG and UHR-SIG for each 20MHz channel for a C-OFDMA procedure.

Referring to FIG. 22, the PPDU from Shared AP1 is allocated to the highest 20MHz channel, the PPDU from Shared AP2 is allocated to the second highest 20MHz channel, the PPDU from Shared AP3 is allocated to the third highest 20MHz channel, and the PPDU from Shared AP4 is allocated to the last 20MHz channel (the lowest 20MHz channel). At this time, it can be seen that the United-SIG and New SIG are duplicated and allocated for the entire 80MHz bandwidth, and the UHR-SIG (or EHT-SIG) and data according to the Shared AP are allocated for each 20MHz channel.

The U-SIG is duplicated every 20MHz and contains aggregated information of the Shared APs. The aggregated information includes the BSS color for C-OFDMA transmission (e.g., set to the BSS color of the Sharing APs or set to a predefined value for C-OFDMA operation or a C-OFDMA group), the maximum bandwidth of the Shared APs or the bandwidth of the Sharing APs, and aggregated punctured channel information of the Shared APs (e.g., channel information punctured by all Shared APs).

Each Shared AP transmits its own UHR-SIG (or EHT-SIG) along with information about associated STAs in the allocated resource unit. At this time, creating a united UHR-SIG is not recommended because AIDs cannot be shared between Shared APs. However, a method of creating a united UHR-SIG and using a United AID instead of an AID can also be proposed. The United AID can be used by allocating and sharing STA IDs in advance so that the Sharing APs/Shared APs that perform this operation can recognize STAs that commonly perform C-OFDMA operation. At this time, the STAs that commonly perform C-OFDMA operation include associated and unassociated STAs.

When STAs decode UHR-SIG (or EHT-SIG), the ID information and the allocated 20MHz unit of each Shared AP can be previously signaled. For example, this can be done by creating a new-SIG (see FIG. 22) or by adding information in the disregards/validates bits of the U-SIG or UHR-SIG (or EHT-SIG). If the Shared APs have different primary 20MHz channels within the entire BW and the Shared AP allocates frequency resources, including its primary channel, to each AP, this signaling may not be necessary. DL C-OFDMA PPDUs must be aligned between Shared APs. STAs can decode U-SIG and EHT-SIG in the same way as 802.11be STAs.

### 2-2) AP-specific U-SIG

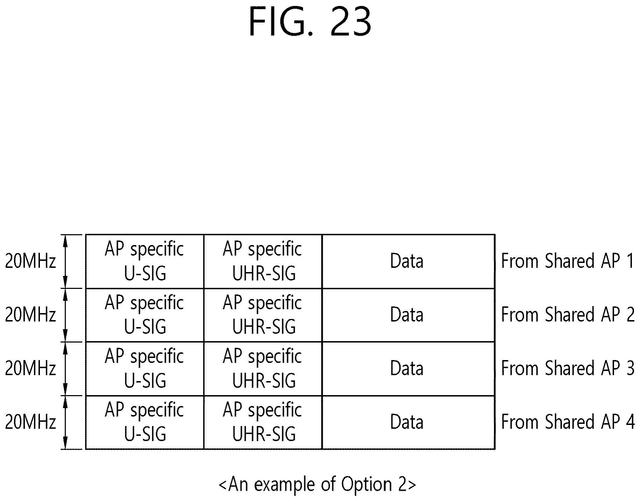

FIG. 23 illustrates an example of configuring an AP-specific U-SIG and UHR-SIG for each 20MHz channel for a C-OFDMA procedure.

Referring to FIG. 23, the PPDU from Shared AP1 is allocated to the highest 20MHz channel, the PPDU from Shared AP2 is allocated to the second highest 20MHz channel, the PPDU from Shared AP3 is allocated to the third highest 20MHz channel, and the PPDU from Shared AP4 is allocated to the last 20MHz channel (the lowest 20MHz channel). At this time, it can be seen that the AP-specific U-SIG, AP-specific UHR-SIG (or EHT-SIG), and data according to the Shared AP are allocated for each 20MHz channel.

Each AP transmits its U-SIG along with its BSS color and BSS information allocated to each 20MHz unit.

An STA can receive C-OFDMA PPDUs from its BSS AP through the following actions:
First, the STA can decode all U-SIGs on all 20MHz channels to receive C-OFDMA PPDUs. However, this imposes a decoding burden on the STA.
Second, the STA can decode the U-SIG on its primary channel to receive C-OFDMA PPDUs. This requires all participating APs to have a different primary 20MHz channel within the entire BW, and the sharing AP allocates frequency resources, including its primary channel, to each AP.
Third, the STA can receive the C-OFDMA PPDU by decoding the U-SIG in the allocated unit of the BSS AP. This requires the STA to know the resource unit in advance through signaling from the BSS AP.

PPDUs do not need to be aligned between shared APs.

### 3. Scheduling Method Based on Resource Units for the C-OFDMA Procedure

### <Prior Art on TWT Operation>

TWT operation allows the AP to manage activity in the BSS to minimize contention between STAs and reduce the amount of time required for STAs utilizing power management mode to remain awake.

An STA negotiates an individual TWT agreement, additional rules and restrictions, and subchannel selective transmission (SST) with another STA.

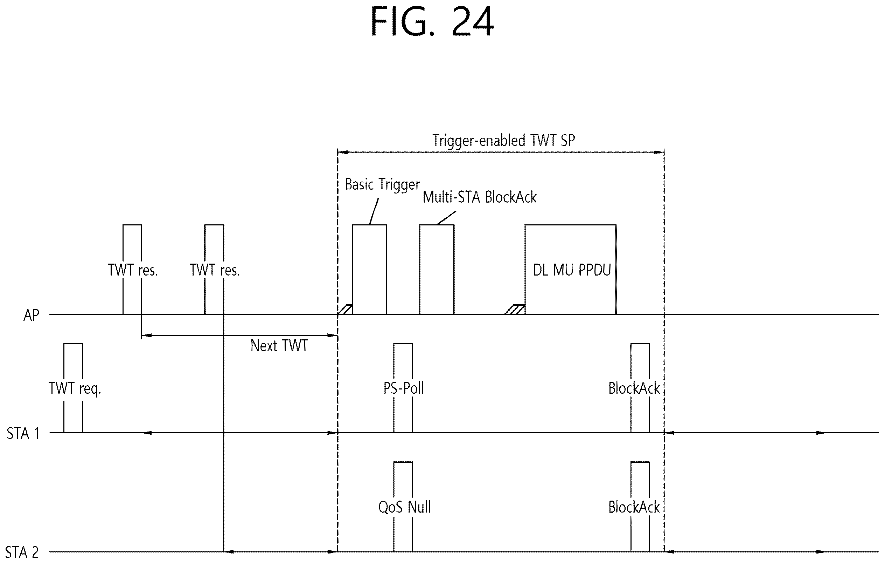

FIG. 24 illustrates an example of an individual TWT operation.

Referring to FIG. 24, AP is a TWT responding STA and STA 1 and STA 2 are TWT requesting STAs.

Referring to FIG. 24, STA 1 sends a TWT request to a TWT responding STA (AP) to establish a trigger-enabled TWT agreement. The TWT responding STA accepts the TWT agreement with STA 1 and confirms the acceptance in the TWT response sent to STA 1. The TWT responding STA then sends an unsolicited TWT response to STA 2 to establish a trigger-enabled TWT agreement with STA 2. Both of these TWT agreements are set to announced TWT. During a trigger-enabled TWT SP, the TWT responding STA sends a Basic Trigger frame to indicate that the TWT requesting STA is awake during the TWT SP. STA 1 sends a PS-Poll frame to indicate that it is awake, and STA 2 sends a QoS Null frame in response to the Basic Trigger frame to indicate that it is awake. STA 1 and STA 2 receive their own DL BU (DL MU PPDU) in a subsequent exchange with the TWT responding STA and transition to Doze state outside this TWT SP.

An SST non-AP STA and an SST AP can establish SST operation by negotiating a trigger-enabled TWT.

An example of broadcast TWT operation is as follows. A TWT scheduling AP includes a Broadcast TWT Element (IE) in a Beacon frame indicating a broadcast TWT SP while the AP is about to send a Trigger frame or DL BU to a TWT scheduled STA. STA 1 and STA 2 wake up to receive the Beacon frame to determine the broadcast TWT.

Restricted TWT (R-TWT) operation was introduced in 802.11be wireless LAN systems and is described as follows.

R-TWT operation allows STAs in a BSS to utilize enhanced medium access protection and resource reservation mechanisms for delay-sensitive traffic delivery. R-TWT membership is established using the same procedures used for establishing broadcast TWT membership. When R-TWT membership is established, the EHT AP must announce R-TWT scheduling information by including a restricted TWT Parameter Set field in the broadcast TWT element.

### <Technology Proposed by This Embodiment>

### 1) Static Scheduling

-> The Sharing AP and the Shared AP can identify the C-OFDMA SP through TWT operation during preparation. If the C-OFDMA SP is a trigger-enabled TWT, it is set by the Basic Trigger frame (DL Trigger frame from the Sharing AP in FIG. 20). Multi-AP communication, performed through contention during the assigned C-OFDMA SP, is called static scheduling.
-> SST operations between APs and STAs and r-TWT SPs can also be extended to Sharing APs and Shared APs.

For example, Sharing APs and Shared APs can negotiate trigger-enabled TWT to establish SST operations. While SST is currently intended for APs and STAs, it can be extended to encompass Sharing APs and Shared APs. This requires FFS.

For example, a Sharing AP can advertise r-TWT SPs along with frequency units to Shared APs. Currently, r-TWT is intended for APs and STAs, but it can be extended to cover both Sharing APs and Shared APs. Several contributions are needed to support multi-AP operation.
-> If a shared AP freely communicates with associated STAs during the SP without any control from the sharing AP, DL C-OFDMA PPDUs between the shared APs do not need to be aligned. (Strictly speaking, this is C-FDMA, not C-OFDMA.)
-> In some way, the associated STAs need to know their assigned units in advance and camp on the SP's units.

### 2) Dynamic Scheduling

-> Dynamic scheduling refers to scheduling by the Shared AP based on the RU allocation field of the DL Trigger frame received from the Sharing AP.
-> A new DL Trigger frame can be defined to trigger the Shared AP's DL PPDU. This new DL Trigger frame must be aligned using OFDMA.

Associated STAs that cannot receive the DL Trigger frame may have difficulty knowing the unit before each DL Trigger frame. (Refer to the operation where the STA decodes the U-SIG and receives the C-OFDMA PPDU on the frequency resources indicated by the Shared AP during preparation, such as during SST operation.)
-> Dynamic scheduling may not be useful in 80 MHz units. However, dynamic scheduling may be more useful in 20 MHz units.

Static scheduling and dynamic scheduling can be applied together (i.e., DL Trigger framed C-OFDMA SPs can be transmitted).

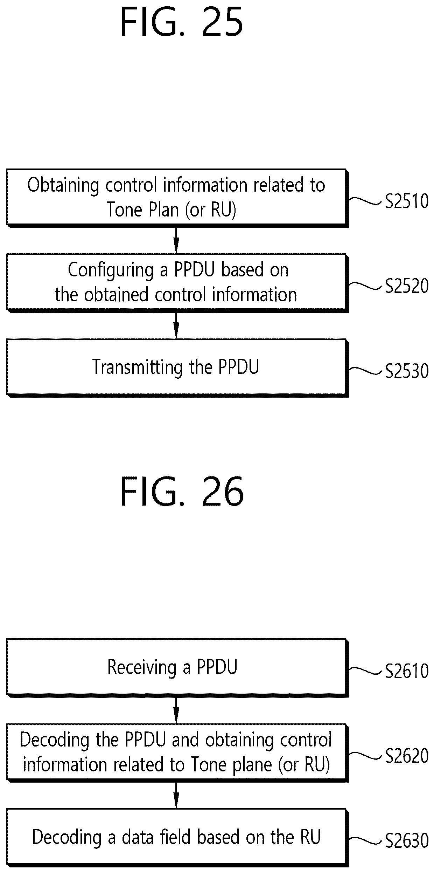

FIG. 25 is a flowchart illustrating the operation of a transmitting device according to the present embodiment.

The example of FIG. 25 may be performed by a transmitting device (AP and/or non-AP STA).

Some of each step (or detailed sub-step to be described later) of the example of FIG. 25 may be skipped/omitted.

Through step S2510, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S2520, the transmitting device may construct/generate a PPDU based on the acquired control information. Configuring/generating the PPDU may include configuring/generating each field of the PPDU. That is, step S2520 includes configuring the EHT-SIG field including control information about the tone plan. That is, step S2520 includes configuring a field including control information (e.g., N bitmap) indicating the size/position of the RU; and/or configuring a field including an identifier of an STA receiving the RU (e.g., AID).

Also, step S2520 may include generating an STF/LTF sequence transmitted through a specific RU. The STF/LTF sequence may be generated based on a preset STF generation sequence/LTF generation sequence.

Also, step S2520 may include generating a data field (i.e., MPDU) transmitted through a specific RU.

The transmitting device may transmit the PPDU constructed through step S2520 to the receiving device based on step S2530.

While performing step S2530, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 26 is a flowchart illustrating the operation of a receiving device according to the present embodiment.

The aforementioned PPDU may be received according to the example of FIG. 26.

The example of FIG. 26 may be performed by a receiving apparatus/device (AP and/or non-AP STA).

Some of each step (or detailed sub-step to be described later) of the example of FIG. 26 may be skipped/omitted.

The receiving device (receiving STA) may receive all or part of the PPDU through step S2610. The received signal may be in the form of FIG. 5.

A sub-step of step S2610 may be determined based on step S2530 of FIG. 25. That is, in step S2610, an operation of restoring the result of the CSD, Spatial Mapping, IDFT/IFFT operation, and GI insertion operation applied in step S2530 may be performed.

In step S2620, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S2630, the receiving device may decode the remaining part of the PPDU based on information about the tone plan (i.e., RU) acquired through step S2620. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S2630 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 26.

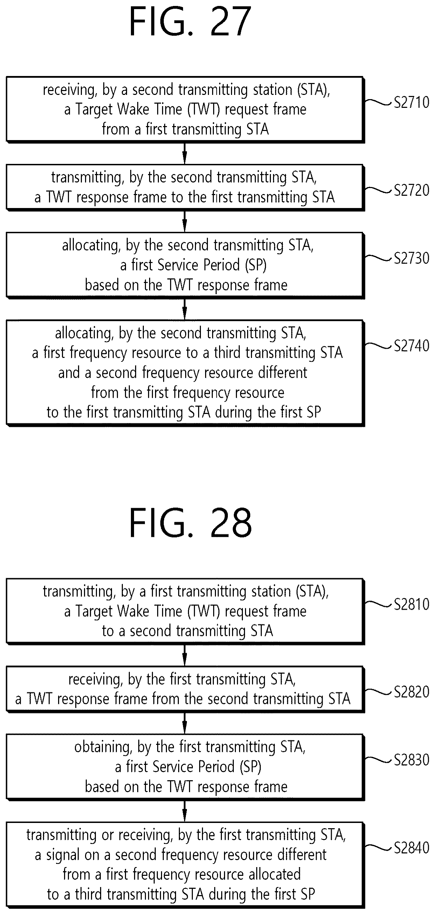

FIG. 27 is a flowchart illustrating a procedure in which a Sharing AP performs a C-OFDMA operation according to the present embodiment.

The example of FIG. 27 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 27 is performed by a second transmitting station (STA), which may correspond to a shared access point (AP) in multi-AP communication. The first and third transmitting STAs of FIG. 27 may correspond to a shared AP in the multi-AP communication. The first and second receiving STAs of FIG. 27 may correspond to at least one STA.

This embodiment proposes a scheduling method according to/based on the minimum allocated resources of each AP by applying the C-OFDMA scheme in communication between multiple access points (or Multi-AP operation). In particular, this embodiment proposes a static or dynamic scheduling method according to/based on resource units to perform C-OFDMA operation. In addition, this embodiment is not limited to the C-OFDMA scheme, and other coordinated Multi-AP schemes such as C-SR and C-BF may be applied.

In step S2710, a second transmitting station (STA) receives a Target Wake Time (TWT) request frame from a first transmitting STA.

In step S2720, the second transmitting STA transmits a TWT response frame to the first transmitting STA.

In step S2730, the second transmitting STA allocates a first Service Period (SP) based on the TWT response frame.

In step S2740, the second transmitting STA allocates a first frequency resource to a third transmitting STA and a second frequency resource different from the first frequency resource to the first transmitting STA during the first SP.

The second transmitting STA is an AP (Sharing AP) that controls multiple access points (multi-AP) communication. The first and third transmitting STAs are APs (Shared APs) that receive information on the multi-AP communication from the second transmitting STA.

That is, this embodiment proposes a method in which a Sharing AP applies C-OFDMA scheme to schedule shared APs according to/based on the minimum allocated resources in multi-AP communication (multi-AP operation). By proposing the C-OFDMA scheme as a coordination method for effectively performing the multi-AP communication, it is possible to perform appropriate scheduling between each AP, and thus, an increase in the overall network throughput can be expected.

The first transmitting STA may transmit and receive a signal in the second frequency resource during the first SP, and the third transmitting STA may transmit and receive a signal in the first frequency resource during the first SP.

Specifically, the first transmitting STA may transmit a first Downlink (DL) Physical Protocol Data Unit (PPDU) to a first receiving STA on the second frequency resource. The first transmitting STA may receive a first Uplink (UL) PPDU in response to the first DL PPDU from the first receiving STA on the second frequency resource.

The third transmitting STA may transmit a second DL PPDU to a second receiving STA on the first frequency resource. The third transmitting STA may receive a second UL PPDU in response to the second DL PPDU from the second receiving STA on the first frequency resource.

The first receiving STA may be an associated STA of the first transmitting STA, and the second receiving STA may be an associated STA of the third transmitting STA.

The first and second DL PPDUs may be transmitted based on Coordinated-Orthogonal Frequency Division Multiple Access (C-OFDMA) operation. Based a signal transmitted by the third transmitting STA to the second receiving STA on the first frequency resource being a second DL PPDU, boundaries of the first and second DL PPDUs may not need to be aligned with each other.

The first transmitting STA may negotiate information for C-OFDMA operation with the second transmitting STA based on the TWT response frame. The information for the C-OFDMA operation may include interval information for the first SP, allocation information for the first and second frequency resources, and channel state information for the first and second frequency resources.

Additionally, the first transmitting STA may perform negotiation for Subchannel Selective Transmission (SST) with the second transmitting STA based on the TWT response frame. At this time, the second frequency resource may be allocated to a secondary channel by the SST.

That is, the present embodiment proposes a method for scheduling and confirming a SP and frequency resources for C-OFDMA operation by negotiating information for C-OFDMA operation during a preparation period due to TWT operation. In this case, communication between multiple APs is performed through contention during the SP for the allocated C-OFDMA operation, which can be referred to as static scheduling.

In addition, the first transmitting STA may receive a trigger frame from the second transmitting STA. The trigger frame may be transmitted during the first SP. The trigger frame may be a frame that triggers the first and second DL PPDUs. The trigger frame may include information on transmission periods of the first and third transmitting STAs.

The trigger frame may further include a Resource Unit (RU) allocation field, and the scheduling of the first and third transmitting STAs by the RU allocation field from the second transmitting STA may be referred to as dynamic scheduling.

The first PPDU may include a first Universal-Signal (U-SIG), a first Ultra High Reliability-Signal (UHR-SIG), and a first data field. The second PPDU may include a second U-SIG, a second UHR-SIG, and a second data field. A unit of the first and second frequency resources is 20 MHz or 80 MHz.

When the unit of the first and second frequency resources is 80 MHz, each shared AP may transmit an AP-specific U-SIG with its own BSS color in the allocated 80 MHz resource. For example, the first transmitting STA may transmit the first U-SIG to the first receiving STA in the second frequency resource, and the first receiving STA may decode the first U-SIG to decode a C-OFDMA PPDU (the first DL PPDU) from its BSS AP (the first transmitting STA). The third transmitting STA may transmit the second U-SIG to the second receiving STA in the first frequency resource, and the second receiving STA may decode the second U-SIG to decode a C-OFDMA PPDU (the second DL PPDU) from its BSS AP (the second transmitting STA).

When the unit of the first and second frequency resources is 20MHz, each shared AP may transmit an AP-specific U-SIG with its own BSS color on the allocated 20MHz resources, or transmit a united U-SIG duplicated for each allocated 20MHz resource. When the united U-SIG is used, the first and second U-SIGs may be duplicated to include integrated information of the shared AP.

FIG. 28 is a flowchart illustrating a procedure in which a Shared AP performs C-OFDMA operation according to the present embodiment.

The example of FIG. 28 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

The example of FIG. 28 is performed by a first transmitting station (STA), and the first and third transmitting STAs may correspond to a shared access point (AP) in multi-AP communication. A second transmitting STA of FIG. 28 may correspond to a shared AP in the multi-AP communication. The first and second receiving STAs of FIG. 28 may correspond to at least one STA.

This embodiment proposes a scheduling method according to/based on the minimum allocated resources of each AP by applying the C-OFDMA scheme in communication between multiple access points (or Multi-AP operation). In particular, this embodiment proposes a static or dynamic scheduling method according to/based on resource units to perform C-OFDMA operation. In addition, this embodiment is not limited to the C-OFDMA scheme, and other coordinated Multi-AP schemes such as C-SR and C-BF may be applied.

In step S2810, a first transmitting station (STA) transmits a Target Wake Time (TWT) request frame to a second transmitting STA.

In step S2820, the first transmitting STA receives a TWT response frame from the second transmitting STA.

In step S2830, the first transmitting STA obtains a first Service Period (SP) based on the TWT response frame.

In step S2840, during the first SP, the first transmitting STA transmits or receives a signal on a second frequency resource different from a first frequency resource allocated to a third transmitting STA.

The second transmitting STA is an AP (Sharing AP) that controls multiple access points (multi-AP) communication. The first and third transmitting STAs are APs (Shared APs) that receive information on the multi-AP communication from the second transmitting STA.

That is, this embodiment proposes a method in which a Sharing AP applies C-OFDMA scheme to schedule shared APs according to/based on the minimum allocated resources in multi-AP communication (multi-AP operation). By proposing the C-OFDMA scheme as a coordination method for effectively performing the multi-AP communication, it is possible to perform appropriate scheduling between each AP, and thus, an increase in the overall network throughput can be expected.

The first transmitting STA may transmit and receive a signal in the second frequency resource during the first SP, and the third transmitting STA may transmit and receive a signal in the first frequency resource during the first SP.

Specifically, the first transmitting STA may transmit a first Downlink (DL) Physical Protocol Data Unit (PPDU) to a first receiving STA on the second frequency resource. The first transmitting STA may receive a first Uplink (UL) PPDU in response to the first DL PPDU from the first receiving STA on the second frequency resource.

The third transmitting STA may transmit a second DL PPDU to a second receiving STA on the first frequency resource. The third transmitting STA may receive a second UL PPDU in response to the second DL PPDU from the second receiving STA on the first frequency resource.

The first receiving STA may be an associated STA of the first transmitting STA, and the second receiving STA may be an associated STA of the third transmitting STA.

The first and second DL PPDUs may be transmitted based on Coordinated-Orthogonal Frequency Division Multiple Access (C-OFDMA) operation. Based a signal transmitted by the third transmitting STA to the second receiving STA on the first frequency resource being a second DL PPDU, boundaries of the first and second DL PPDUs may not need to be aligned with each other.

The first transmitting STA may negotiate information for C-OFDMA operation with the second transmitting STA based on the TWT response frame. The information for the C-OFDMA operation may include interval information for the first SP, allocation information for the first and second frequency resources, and channel state information for the first and second frequency resources.

Additionally, the first transmitting STA may perform negotiation for Subchannel Selective Transmission (SST) with the second transmitting STA based on the TWT response frame. At this time, the second frequency resource may be allocated to a secondary channel by the SST.

That is, the present embodiment proposes a method for scheduling and confirming a SP and frequency resources for C-OFDMA operation by negotiating information for C-OFDMA operation during a preparation period due to TWT operation. In this case, communication between multiple APs is performed through contention during the SP for the allocated C-OFDMA operation, which can be referred to as static scheduling.

In addition, the first transmitting STA may receive a trigger frame from the second transmitting STA. The trigger frame may be transmitted during the first SP. The trigger frame may be a frame that triggers the first and second DL PPDUs. The trigger frame may include information on transmission periods of the first and third transmitting STAs.

The trigger frame may further include a Resource Unit (RU) allocation field, and the scheduling of the first and third transmitting STAs by the RU allocation field from the second transmitting STA may be referred to as dynamic scheduling.

The first PPDU may include a first Universal-Signal (U-SIG), a first Ultra High Reliability-Signal (UHR-SIG), and a first data field. The second PPDU may include a second U-SIG, a second UHR-SIG, and a second data field. A unit of the first and second frequency resources is 20 MHz or 80 MHz.

When the unit of the first and second frequency resources is 80 MHz, each shared AP may transmit an AP-specific U-SIG with its own BSS color in the allocated 80 MHz resource. For example, the first transmitting STA may transmit the first U-SIG to the first receiving STA in the second frequency resource, and the first receiving STA may decode the first U-SIG to decode a C-OFDMA PPDU (the first DL PPDU) from its BSS AP (the first transmitting STA). The third transmitting STA may transmit the second U-SIG to the second receiving STA in the first frequency resource, and the second receiving STA may decode the second U-SIG to decode a C-OFDMA PPDU (the second DL PPDU) from its BSS AP (the second transmitting STA).

When the unit of the first and second frequency resources is 20MHz, each shared AP may transmit an AP-specific U-SIG with its own BSS color on the allocated 20MHz resources, or transmit a united U-SIG duplicated for each allocated 20MHz resource. When the united U-SIG is used, the first and second U-SIGs may be duplicated to include integrated information of the shared AP.

### <Device configuration>

The technical features of the present disclosure may be applied to various devices and methods. For example, the technical features of the present disclosure may be performed/supported through the device(s) of FIG. 1 and/or FIG. 13. For example, the technical features of the present disclosure may be applied to only part of FIG. 1 and/or FIG. 13. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 13. For example, the device according to the present disclosure transmits a Target Wake Time (TWT) request frame to a second transmitting station (STA); receives a TWT response frame from the second transmitting STA; obtains a first Service Period (SP) based on the TWT response frame; and transmits or receive a signal on a second frequency resource different from a first frequency resource allocated to a third transmitting STA during the first SP.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including transmitting a Target Wake Time (TWT) request frame to a second transmitting station (STA); receiving a TWT response frame from the second transmitting STA; obtaining a first Service Period (SP) based on the TWT response frame; and transmitting or receiving a signal on a second frequency resource different from a first frequency resource allocated to a third transmitting STA during the first SP. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 13. Meanwhile, the CRM of the present disclosure may be the memory 112, 122 of FIG. 1, the memory 620 of FIG. 13, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:
transmitting, by a first transmitting station (STA), a Target Wake Time (TWT) request frame to a second transmitting STA;
receiving, by the first transmitting STA, a TWT response frame from the second transmitting STA;
obtaining, by the first transmitting STA, a first Service Period (SP) based on the TWT response frame; and
transmitting or receiving, by the first transmitting STA, a signal on a second frequency resource different from a first frequency resource allocated to a third transmitting STA during the first SP,
wherein the second transmitting STA is an AP that controls multiple access points (multi-AP) communication, and
wherein the first and third transmitting STAs are APs that receive information on the multi-AP communication from the second transmitting STA.

2. The method of claim 1, further comprising:
transmitting, by the first transmitting STA, a first Downlink (DL) Physical Protocol Data Unit (PPDU) to a first receiving STA on the second frequency resource;
receiving, by the first transmitting STA, a first Uplink (UL) PPDU in response to the first DL PPDU from the first receiving STA on the second frequency resource.

3. The method of claim 2, wherein based a signal transmitted by the third transmitting STA to the second receiving STA on the first frequency resource being a second DL PPDU, boundaries of the first and second DL PPDUs do not need to be aligned with each other,
wherein the first receiving STA is an associated STA of the first transmitting STA,
wherein the second receiving STA is an associated STA of the third transmitting STA.

4. The method of claim 3, wherein the first and second DL PPDUs are transmitted based on Coordinated-Orthogonal Frequency Division Multiple Access (C-OFDMA) operation.

5. The method of claim 4, further comprising:
negotiating, by the first transmitting STA, information for C-OFDMA operation with the second transmitting STA based on the TWT response frame,
wherein the information for the C-OFDMA operation includes interval information for the first SP, allocation information for the first and second frequency resources, and channel state information for the first and second frequency resources.

6. The method of claim 5, further comprising:
performing, by the first transmitting STA, negotiation for Subchannel Selective Transmission (SST) with the second transmitting STA based on the TWT response frame,
wherein the second frequency resource is allocated to a secondary channel by the SST.

7. The method of claim 3, further comprising:
receiving, by the first transmitting STA, a trigger frame from the second transmitting STA,
wherein the trigger frame is transmitted during the first SP,
wherein the trigger frame is a frame that triggers the first and second DL PPDUs,
wherein the trigger frame includes information on transmission periods of the first and third transmitting STAs.

8. The method of claim 3, wherein the first PPDU includes a first Universal-Signal (U-SIG), a first Ultra High Reliability-Signal (UHR-SIG), and a first data field,
wherein the second PPDU includes a second U-SIG, a second UHR-SIG, and a second data field,
wherein a unit of the first and second frequency resources is 20 MHz or 80 MHz.

9. A first transmitting station (STA) in a wireless local area network (WLAN) system, the first transmitting STA comprising:
a memory;
a transceiver; and
a processor being operatively connected to the memory and the transceiver,
wherein the processor is configured to:
transmit a Target Wake Time (TWT) request frame to a second transmitting STA;
receive a TWT response frame from the second transmitting STA;
obtain a first Service Period (SP) based on the TWT response frame; and
transmit or receive a signal on a second frequency resource different from a first frequency resource allocated to a third transmitting STA during the first SP,
wherein the second transmitting STA is an AP that controls multiple access points (multi-AP) communication, and
wherein the first and third transmitting STAs are APs that receive information on the multi-AP communication from the second transmitting STA.

10. A method in a wireless local area network (WLAN) system, the method comprising:
receiving, by a second transmitting station (STA), a Target Wake Time (TWT) request frame from a first transmitting STA;
transmitting, by the second transmitting STA, a TWT response frame to the first transmitting STA;
allocating, by the second transmitting STA, a first Service Period (SP) based on the TWT response frame; and
allocating, by the second transmitting STA, a first frequency resource to a third transmitting STA and a second frequency resource different from the first frequency resource to the first transmitting STA during the first SP,
wherein the second transmitting STA is an AP that controls multiple access points (multi-AP) communication, and
wherein the first and third transmitting STAs are APs that receive information on the multi-AP communication from the second transmitting STA.

11. The method of claim 10, further comprising:
negotiating, by the second transmitting STA, information for C-OFDMA operation with the first transmitting STA based on the TWT response frame,
wherein the information for the C-OFDMA operation includes interval information for the first SP, allocation information for the first and second frequency resources, and channel state information for the first and second frequency resources.

12. The method of claim 11, further comprising:
performing, by the second transmitting STA, negotiation for Subchannel Selective Transmission (SST) with the first transmitting STA based on the TWT response frame,
wherein the second frequency resource is allocated to a secondary channel by the SST.

13. The method of claim 10, further comprising:
transmitting, by the second transmitting STA, a trigger frame to the first transmitting STA,
wherein the trigger frame is transmitted during the first SP,
wherein the trigger frame is a frame that triggers first and second DL PPDUs,
wherein the first DL PPDU is transmitted by the first transmitting STA in the second frequency resource,
wherein the second DL PPDU is transmitted by the third transmitting STA in the first frequency resource,
wherein the trigger frame includes information on transmission periods of the first and third transmitting STAs.

14. The method of claim 13, wherein the first PPDU includes a first Universal-Signal (U-SIG), a first Ultra High Reliability-Signal (UHR-SIG), and a first data field,
wherein the second PPDU includes a second U-SIG, a second UHR-SIG, and a second data field,
wherein a unit of the first and second frequency resources is 20 MHz or 80 MHz.

15. A second transmitting station (STA) in a wireless local area network (WLAN) system, the second transmitting STA comprising:
a memory;
a transceiver; and
a processor being operatively connected to the memory and the transceiver,
wherein the processor is configured to:
receive a Target Wake Time (TWT) request frame from a first transmitting STA;
transmit a TWT response frame to the first transmitting STA;
allocate a first Service Period (SP) based on the TWT response frame; and
allocate a first frequency resource to a third transmitting STA and a second frequency resource different from the first frequency resource to the first transmitting STA during the first SP,
wherein the second transmitting STA is an AP that controls multiple access points (multi-AP) communication, and
wherein the first and third transmitting STAs are APs that receive information on the multi-AP communication from the second transmitting STA.

16. A computer readable medium including an instruction being executed by at least one processor and performing a method comprising the steps of:
transmitting a Target Wake Time (TWT) request frame to a second transmitting station (STA);
receiving a TWT response frame from the second transmitting STA;
obtaining a first Service Period (SP) based on the TWT response frame; and
transmitting or receiving a signal on a second frequency resource different from a first frequency resource allocated to a third transmitting STA during the first SP,
wherein the second transmitting STA is an AP that controls multiple access points (multi-AP) communication, and
wherein a first transmitting STA and the third transmitting STA are APs that receive information on the multi-AP communication from the second transmitting STA.

17. A device in a wireless local area network (WLAN) system, the device comprising:
a memory; and
a processor being operatively connected to the memory,
wherein the processor is configured to:
transmit a Target Wake Time (TWT) request frame to a second transmitting station (STA);
receive a TWT response frame from the second transmitting STA;
obtain a first Service Period (SP) based on the TWT response frame; and
transmit or receive a signal on a second frequency resource different from a first frequency resource allocated to a third transmitting STA during the first SP,
wherein the second transmitting STA is an AP that controls multiple access points (multi-AP) communication, and
wherein a first transmitting STA and the third transmitting STA are APs that receive information on the multi-AP communication from the second transmitting STA.
